# EUROPÄISCHE PATENTSCHRIFT

(11) **EP 1 020 111 B1**
(45) Veröffentlichungstag und Bekanntmachung des Hinweises auf die Patenterteilung: **24.03.2004**
(21) Anmeldenummer: 00100122.1
(22) Anmeldetag: 05.01.2000
(51) Int. Cl.: A01J 5/017

(54) **Verfahren und Vorrichtung zum Ansetzen wenigstens eines Melkbechers an eine Zitze eines Tieres**
Method of and Device for connecting at least one teat cup to a teat of an animal
Procédé et dispositif pour la mise en place d'au moins un gobelet trayeur sur un trayon d'un animal

(30) Priorität: 14.01.1999 DE 19901241
(43) Veröffentlichungstag der Anmeldung: 19.07.2000
(73) Patentinhaber: WestfaliaSurge GmbH, 59302 Oelde (DE)
(72) Erfinder: Hoppe, Friedhelm, 59329 Wadersloh-Diestedde (DE); Kimm, Kurt, 33332 Gütersloh (DE)
(74) Vertreter: Kahlhöfer, Hermann, Dipl.-Phys.

(56) Entgegenhaltungen:
- EP-A- 0 188 303
- EP-A- 0 258 938
- EP-A- 0 630 564
- EP-A- 0 692 187
- WO-A-90/07268
- WO-A-92/06588

## Beschreibung

Der Gegenstand der Erfindung bezieht sich auf ein Verfahren sowie auf eine Vorrichtung zum Ansetzen wenigstens eines Melkbechers an eine Zitze eines Tieres, insbesondere einer Kuh. Die Vorrichtung umfaßt eine Sensoreinrichtung, die wenigstens eine Sensoreinheit hat, die zur Anlage an ein hinteres Körperteil des Tieres bringbar ist. Die Vorrichtung weist auch eine Ansetzeinrichtung auf, die wenigstens einen Positionierarm zum Anbringen wenigstens eines Melkbechers an eine Zitze des Tieres und eine Positioniereinrichtung zum Orten wenigstens einer Zitze aufweist. Die Positioniereinrichtung ist mit einer Steuereinrichtung verbunden.

Zum maschinellen Ansetzen wenigstens eines Melkbechers an eine Zitze eines Tieres, insbesondere einer Kuh, sind unterschiedlichste Ausgestaltungen solcher Vorrichtungen entwickelt worden. Durch die EP 0 300 115 B1 ist eine Vorrichtung zum Ansetzen wenigstens eines Melkbechers an eine Zitze eines Tieres bekannt. Die Vorrichtung weist Sensoren zum Orten der Lage der Zitze sowie einen ortsbeweglichen Positionierarm zum Anbringen wenigstens eines Melkbechers auf Der Positionierarm wird durch eine Positioniereinrichtung gesteuert. Die Ortung wenigstens einer Zitze erfolgt derart, daß zunächst mittels einer Sensoreinheit eine Grobpositionierung des Positionierarms erfolgt. Danach wird der Positionierarm mittels weiterer Sensoren fein positioniert. Nach dem Auffinden der Zitze wird der Melkbecher angesetzt.

Bei den Sensoren kann es sich um Ultraschallsensoren oder um optische Sensoren handeln. Da die Sensoren im Verschmutzungsbereich angeordnet sind, besteht die Gefahr, daß die Empfindlichkeit der Sensoren durch Verschmutzung heruntergesetzt wird, so daß sich der zeitliche Aufwand für eine Ortung einer Zitze erhöht.

Durch die EP 0 191 517 B1, die EP 0 258 938 B1 sowie durch die EP 0 551 960 B1 sind Vorrichtungen zum Ansetzen wenigstens eines Melkbechers bekannt, durch die eine Grobpositionierung des Positionierarms dadurch erleichtert werden soll, daß die Bewegungsfreiheit des Tieres in einem Melkstand durch Sperrmittel herabgesetzt wird. Das Tier nimmt im Melkstand eine vorgegebene Zwangsposition ein, die das Tier während der Ortung der wenigstens einer Zitze nicht verändern kann. Diese Zwangsposition des Tieres im Melkstand kann dazu führen, daß die Milchleistung des Tieres abnimmt, da das Tier im Melkstand einer erhöhten Streßsituation durch die Zwangsposition ausgesetzt wird.

Durch die EP 0 630 564 A2 ist eine Vorrichtung zum Ansetzen wenigstens eines Melkbechers bekannt, die eine Sensoreinrichtung, die wenigstens eine Sensoreinheit hat, die zur Anlage an ein hinteres Körperteil des Tieres bringbar ist, bekannt. Die Sensoreinheit ist in Längsrichtung des Melkstandes und somit in Längsrichtung des Tieres verschieblich angeordnet, so daß sich das Tier innerhalb des Melkstandes bewegen kann. Die Sensoreinrichtung folgt der Bewegung des Tieres. Der Positionierarm ist über ein Gestell fest mit der Sensoreinrichtung verbunden. Der Positionierarm folgt zwangsläufig der Bewegung der Sensoreinrichtung. Das Gestell ist bezüglich des Tieres ortsfest. Die Sensoreinrichtung ist an einem Querträger angeordnet, der um eine im wesentlichen vertikal verlaufende Achse verschwenkbar ist. Um einem Tier die Möglichkeit zu geben, in den Melkstand einzutreten, muß der Querträger aus dem Melkstand heraus verschwenkt werden. Dies erfordert genügend Platz, um eine Verschwenkung vornehmen zu können.

Durch die WO-A-9206588 ist eine Vorrichtung zum Ansetzen wenigstens eines Melkbechers an eine Zitze eines Tieres bekannt. Ausgangspunkt in der WO-A-9206588 ist die Überlegung, dass das Einsetzen der Melkbecher an die Zitzen eines Tieres problematisch ist, wenn sich das Tier innerhalb des Melkstandes bewegen kann. Dieses Problem kann dadurch verringert werden, dass die Bewegungsfreiheit des Tieres im Melkstand beschränkt wird. Die Beschränkung der Bewegungsmöglichkeit des Tieres im Melkstand kann jedoch dazu führen, dass die Bereitschaft des Tieres dem Melkstand zu betreten bis hin zur Verweigerung sinkt. Nach der WO-A-9206588 wird daher vorgeschlagen, dass der Melkstand einen Boden hat, der so ausgebildet ist, dass der vordere Teil des Tieres höher steht, als der hintere Teil, so dass der Zugang zum Euter und den Zitzen verbessert wird. Konstruktiv wird dies dadurch gelöst, dass in dem Boden eine Stufe ausgebildet ist. Durch diese Maßnahme wird erreicht, dass das Tier eine komfortable Stellung in dem Melkstand einnehmen kann, wobei durch diese Stellung die Bewegungsfreiheit des Tieres automatisch beschränkt wird. Dies bedeutet, dass das Tier im Melkstand nicht mehr vor- oder zurückgehen kann, wenn es die durch die Stufe bedingte gestreckte Stellung einnahm. Während des Melkvorgangs, wobei der Melkvorgang als solcher auch das Auffinden der Zitzen und das Ansetzen der Melkbecher an die Zitzen umfasst, wird dem Tier im Melkstand Futter bereitgestellt. Das Futter befindet sich in einem Futtertrog, der mittels einer geeigneten Vorrichtung längs des Melkstandes hin- und her verfahrbar ist. Hierzu ist es notwenig zu wissen, wo sich der Kopf des Tieres befindet, den Futtertrog hinreichend nahe an das Tier zu bringen, wenn dieses eine Fressmöglichkeit haben soll. Umgekehrt ist es auch von Bedeutung, zu wissen, wo sich der Kopf des Tieres ungefähr befindet, damit der Futtertrug außer Reichweite des Tieres gebracht werden kann, wenn das Tier nicht fressen soll. Hierzu werden nach der WO-A-9206588 Führungsmittel vorgesehen, die zur Anlage an das Tier bringbar sind. Diese Führungsmittel liefern die Position des Tieres innerhalb des Melkstandes, wo sich das Tier in einer Zwangsstellung findet, sind die Mittel dazu bestimmt, die Stellung des Tieres zu bestimmen.

Nach der EP-A-0188303 wird eine Vorrichtung zum Ansetzen wenigstens eines Melkbechers an eine Zitze eines Tieres vorgeschlagen, wobei das Tier im Melkstand eine gute Position einnimmt, so dass das Tier diese Position nicht mehr verlässt. Hat das Tier die bequeme Stellung eingenommen, so wird die Position des Tieres innerhalb des Melkstandes bestimmt.

Hiervon ausgehend liegt der vorliegenden Erfindung die Aufgabe zugrunde, ein Verfahren sowie eine Vorrichtung zum Ansetzen wenigstens eines Melkbechers an eine Zitze eines Tieres so weiterzubilden, dass eine Grobpositionierung des Positionierarms vereinfacht wird. Diese Zielsetzung wird erfindungsgemäß durch ein Verfahren zum Ansetzen wenigstens eines Melkbechers an eine Zitze eines Tieres, insbesondere eine Kuh, mit den Merkmalen des Anspruchs 1 bzw. durch eine Vorrichtung mit den Merkmalen des Anspruchs 4 erreicht. Vorteilhafte Weiterbildungen und Ausgestaltungen des Verfahrens bzw. der Vorrichtung sind Gegenstand der jeweiligen abhängigen Ansprüche.

Das erfindungsgemäße Verfahren zum Ansetzen wenigstens eines Melkbechers an eine Zitze eines Tieres, insbesondere einer Kuh, zeichnet sich dadurch aus, dass wenigstens eine Sensoreinheit einer Sensoreinrichtung zur Anlage an ein hinteres Körperteil des Tieres gebracht wird. Eine Bewegung des Tieres führt 2a einer Lageveränderung der Sensoreinheit. Diese Lageveränderung der Sensoreinheit bezüglich einer Referenzlage wird mittels einer Messeinrichtung gemessen. Die gemessene Lageveränderung wird durch eine Auswerteeinheit einer Steuereinrichtung bewertet. Das Ergebnis der Auswertung wird zur Grobpositionierung wenigstens eines Positionierarmes einer Ansetzeinrichtung zum Anbringen des wenigstens eines Melkbechers an die Zitze des Tieres verwendet.

Durch dieses erfindungsgemäße Verfahren wird die Grobpositionierung des Positionierarmes vereinfacht. Zudem wird die Bewegungsmöglichkeit des Tieres im Melkstand nicht beschränkt, so dass das Tier im Melkstand keiner erhöhten Streßsituation durch eine Zwangsposition ausgesetzt wird.

Nach einer vorteilhaften Ausgestaltung des Verfahrens wird vorgeschlagen, dass die Sensoreinheit durch Verschwenken um wenigstens eine Achse zur Anlage an das hintere Körperteil des Tieres gebracht wird.

Bei der Bestimmung der Lageveränderung der Sensoreinheit bezüglich einer Referenzlage wird vorzugsweise ein Auslenkwinkel oder ein Auslenkweg der Sensoreinheit gemessen.

Die Vorrichtung zum Ansetzen wenigstens eines Melkbechers an eine Zitze eines Tieres, insbesondere einer Kuh weist eine Sensoreinrichtung auf, die wenigstens eine Sensoreinheit hat. Die Sensoreinheit ist zur Anlage an ein hinteres Körperteil des Tieres bringbar. Die Vorrichtung weist auch eine Ansetzeinrichtung auf, die wenigstens einen Positionierarm zum Anbringen wenigstens eines Melkbechers an eine Zitze des Tieres und eine Positioniereinrichtung zum Orten wenigstens einer Zitze und zum Positionieren des Positionierarms aufweist. Die Vorrichtung weist desweiteren eine Steuereinrichtung auf, die mit der Positioniereinrichtung verbunden ist. Die erfindungsgemäße Vorrichtung zeichnet sich dadurch aus, daß die Sensoreinrichtung eines mit der Sensoreinheit verbundene Meßeinrichtung aufweist. Die Sensoreinrichtung ist ortsfest bezüglich einer Referenzlage angeordnet. Die Sensoreinheit ist jedoch lageveränderlich mit der Bewegung eines Tieres ausgebildet. Die Meßeinrichtung mißt eine Lageänderung der Sensoreinheit bezüglich der Referenzlage. Die Meßeinrichtung ist mit der Steuereinrichtung, die eine Auswertereinheit aufweist, verbunden. In der Auswertereinheit wird die Messung, die die Meßeinrichtung durchgeführt hat, ausgewertet. Das Ergebnis der Auswertung wird zur Grobpositionierung des Positionierarms verwendet. Zwischen der Sensoreinrichtung und der Positioniereinrichtung, insbesondere dem Positionierarm besteht keine mechanische Verbindung, so daß die Sensoreinheit unabhängig vom Positionierarm bewegbar ist. Hierdurch wird eine im Gegensatz zu der Ausgestaltung nach der EP 0 630 564 A2 größere Reaktionsfähigkeit der Sensoreinheit auf mögliche Bewegungen des Tieres erreicht. Da der Positionierarm nicht mit der Sensoreinheit mechanisch verbunden ist, sind geringere Massen zu bewegen.

Nach einer vorteilhaften Ausgestaltung der erfindungsgemäßen Vorrichtung wird vorgeschlagen, daß die Sensoreinheit um wenigstens eine Achse verschwenkbar ist. Vorzugsweise wird die Sensoreinheit um eine im wesentlichen horizontal verlaufende Achse verschwenkt. Die im wesentlichen horizontal verlaufende Achse ist dabei vorzugsweise so angeordnet, daß diese mit Abstand zum Boden angeordnet ist. Durch diese Anordnung wird auch erreicht, daß schmutzempfindliche Teile dieser Sensoreinrichtung außerhalb des Schmutzbereichs angeordnet sind. Dadurch, daß die Achse horizontal verläuft und mit Abstand zum Boden angeordnet ist, ist der Zugang eines Tieres für einen Melkstand vereinfacht, da die Sensoreinrichtung nach oben hin aus dem Melkstand heraus geschwenkt werden kann. Hierdurch verringert sich auch der Platzbedarf. Die Sensoreinheit kann zusätzlich zu einer horizontal verlaufenden Achse auch um eine im wesentlichen vertikal verlaufende Achse verschwenkbar sein, wodurch die Genauigkeit der Grobpositionierung des Tieres innerhalb eines Melkstandes weiter verbessert werden kann.

Vorzugsweise ist die erfindungsgemäße Vorrichtung mit einer Sensoreinheit ausgebildet, die wenigstens ein im wesentlichen stabförmiges Tastelement aufweist. Bevorzugt wird jedoch eine Vorrichtung, bei der die Sensoreinheit durch einen U-förmigen Bügel gebildet ist. Durch den U-förmigen Bügel wird sichergestellt, daß die Sensoreinheit auch zuverlässig zur Anlage an ein hinteres Körperteil des Tieres bringbar ist. Durch den U-förmigen Bügel kann auch eine Auslenkung der Sensoreinheit um eine im wesentlichen vertikal verlaufende Achse relativ einfach übertragen werden.

Gemäß einer noch weiteren vorteilhaften Ausgestaltung der Vorrichtung wird vorgeschlagen, daß der Bügel Schenkel aufweist, die mit der Achse verbunden sind. Die Schenkel sind vorzugsweise im wesentlichen parallel zueinander ausgebildet. Der Abstand zwischen den Schenkeln ist kleiner als eine Innenbreite eines Melkstandes.

Gemäß einer noch weiteren vorteilhaften Ausgestaltung der Vorrichtung wird vorgeschlagen, daß die Meßeinrichtung eine Winkelmeßeinrichtung ist, die eine Auslenkung der Sensoreinheit um die wenigstens eine Achse mißt. Bei der Winkelmeßeinrichtung handelt es sich vorzugsweise um eine digital arbeitende Winkelmeßeinrichtung, so daß die digitalen Signale der Winkelmeßeinrichtung der Auswertereinheit der Steuerungseinrichtung zugeführt werden können. In der Auswertereinheit wird auf der Basis der ermittelten Auslenkung der Sensoreinheit die relative Lage des Tieres bezüglich der Referenzlage bestimmt.

Bei der Meßeinrichtung kann es sich auch um eine Wegmeßeinrichtung handeln, die einen Auslenkweg der Sensoreinheit aus der Referenzlage mißt. Die Wegmeßeinrichtung kann beispielsweise eine induktiv arbeitende Wegmeßeinrichtung sein.

Gemäß einer noch weiteren vorteilhaften Ausgestaltung der Vorrichtung wird vorgeschlagen, daß die Sensoreinrichtung eine Betätigungseinheit aufweist, die mit der Sensoreinheit so verbunden ist, daß diese mit einer vorbestimmten Kraft an einem hinteren Körperteil des Tieres anliegt. Die Kraft ist dabei so gewählt, daß das Tier auf das Anliegen der Sensoreinheit keine negativen Reaktionen zeigt. Die Sensoreinheit liegt auch während einer Bewegung des Tieres mit der vorbestimmten Kraft an dieser an.

Die Betätigungseinheit ist vorzugsweise mit der Achse verbunden. Um das Moment, welches benötigt wird, um die Sensoreinheit an ein hinteres Körperteil des Tieres zur Anlage zu bringen, möglichst gering zu halten, wird vorgeschlagen, daß die Betätigungseinheit über einen Hebel mit der Achse verbunden ist.

Gemäß einer noch weiteren vorteilhaften Ausgestaltung der Vorrichtung wird vorgeschlagen, daß die Betätigungseinheit durch eine hydraulisch oder pneumatisch wirkende Kolben-Zylinder-Einheit gebildet ist. Vorzugsweise ist die Betätigungseinheit eine pneumatisch arbeitende Kolben-Zylinder-Einheit. Insbesondere wird vorgeschlagen, daß die Kolben-Zylinder-Einheit einen beidseitig mit einem Druckmedium beaufschlagbaren Kolben aufweist, so daß die Kraft, mit der die Sensoreinheit an dem hinteren Teil des Tierkörpers anliegt, während einer Bewegung des Tieres konstant gehalten werden kann.

Die Betätigungseinheit kann auch eine elektromotorisch wirkende Einheit sein. Die Betätigungseinheit kann auch durch wenigstens eine Feder, vorzugsweise Zugfeder, gebildet sein, so daß die Sensoreinheit zur Anlage an den hinteren Teil des Tierkörpers gelangt.

Weitere Einzelheiten und Vorteile der erfindungsgemäßen Vorrichtung zum Ansetzen wenigstens eines Melkbechers werden anhand des in der Zeichnung dargestellten Ausführungsbeispiel erläutert. Es zeigen:
- Fig. 1: schematisch eine Vorrichtung zum Ansetzen wenigstens eines Melkbechers,
- Fig. 2: schematisch einen Schaltplan und
- Fig. 3: eine Ausführungsform einer Sensoreinheit.

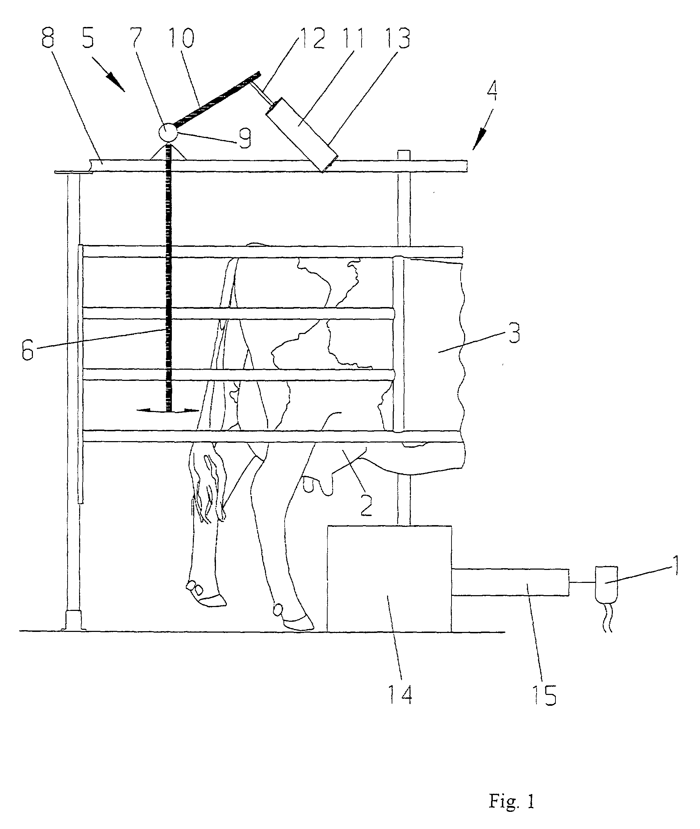

In der Fig. 1 ist schematisch eine Vorrichtung zum Ansetzen wenigstens eines Melkbechers 1 an eine Zitze 2 eines Tieres 3. Das Tier 3, bei dem es sich in dem dargestellten Ausführungsbeispiel um eine Kuh handelt, ist in einem Melkstand 4 dargestellt. Der Melkstand 4 ist in einer an sich bekannten Weise aufgebaut.

Die Vorrichtung weist eine Sensoreinrichtung 5 auf Die Sensoreinrichtung 5 umfaßt eine Sensoreinheit 6, die zur Anlage an ein hinteres Körperteil des Tieres 3 bringbar ist. Die Sensoreinheit 6 ist um eine im wesentlichen horizontal verlaufende Achse 7 verschwenkbar. Die Achse 7 ist an einem oberen Träger 8 gelagert. Die Sensoreinheit 6 ist mit einer Meßeinrichtung 9 verbunden. Bei der Meßeinrichtung 9 handelt es sich um eine Winkelmeßeinrichtung, die eine Auslenkung der Sensoreinheit 6 um die Achse 7 bezüglich einer Referenzlage mißt. Bei der Meßeinrichtung 9 handelt es sich vorzugsweise um einen digital arbeitenden Winkelcodierer. Die Meßeinrichtung 9 ist außerhalb eines Schmutzund Wasserbereichs angeordnet.

Mit der Achse 7 ist ein Hebel 10 verbunden, an dem eine Betätigungseinheit 11 angreift. Bei der Betätigungseinheit 11 handelt es sich in dem dargestellten Ausführungsbeispiel um eine pneumatisch wirkende Kolben-Zylinder-Einheit. Die Kolbenstange 12 ist mit ihrem freien Ende mit dem Hebel 10 verbunden. Der Zylinder 13 ist gelenkig mit dem Träger 8 verbunden. Durch Beaufschlagung der Betätigungseinheit mit einem Druckmedium wird die Sensoreinheit 6 über den Hebel 10 um die Achse 7 in Richtung des hinteren Körperteils des Tieres 3 verschwenkt. Der Verschwenkvorgang wird erst dann beendet, wenn die Sensoreinheit 6 mit einer vorgegebenen Kraft am Körper des Tieres 3 anliegt. Bei einer Bewegung des Tieres 3 wird bei einer Abnahme der zwischen der Sensoreinheit 6 und dem Körperteil des Tieres wirkenden Kraft wird die Sensoreinheit 6 durch die Betätigungseinheit 11 nachgeführt. Die Kraft, welche die Sensoreinheit auch bei einer Bewegung des Tieres innerhalb des Melkstandes auf das Tier einwirkt, ist vorzugsweise konstant. Hierzu wird der Druck des Mediums der Kolben-Zylinder-Einheit in entsprechender Weise verändert.

Vorzugsweise wird der Druck innerhalb der Kolben-Zylinder-Einheit zum Herausschwenken der Sensoreinheit aus einem Melkstand so verändert, daß die Sensoreinheit relativ schnell aus dem Melkstand herausgeschwenkt werden kann.

Die Meßeinrichtung 9 ist mittels einer Steuerleitung mit einer Ansetzeinrichtung 14 verbunden. Die Ansetzeinrichtung 14 weist eine nicht dargestellte Positioniereinrichtung zum Orten wenigstens einer Zitze auf. Durch diese Positioniereinrichtung erfolgt eine Feinortung der Zitze. Die Ansetzeinrichtung 14 weist wenigstens einen Positionierarm 15 auf, der den wenigstens einen zu positionierenden Melkbecher 1 trägt.

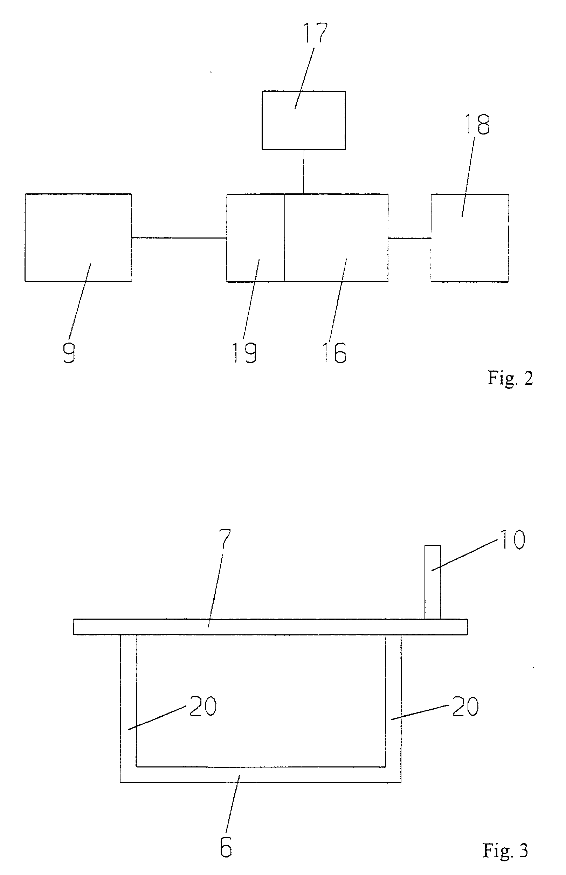

Fig. 2 zeigt schematisch einen Schaltplan. Die Ansetzeinrichtung 14 weist eine Steuerungseinrichtung 16 auf, durch die ein Antrieb 18 ansteuerbar ist. Durch den Antrieb 18 wird der Positionierarm 15 positioniert und an die Position des Tieres angepaßt.

Die Meßeinrichtung 9 ist mittels einer Steuerleitung mit der Steuereinrichtung 16 verbunden. Die Steuereinrichtung 16 weist eine Auswertereinheit 19 auf, in der die Meßergebnisse der Meßeinrichtung 9 ausgewertet werden. Die Messung, welche durch die Meßeinrichtung 9 erfolgt, kann kontinuierlich oder innerhalb vorgegebener Zeitintervalle erfolgen. Insbesondere wird in der Auswertereinheit 19 der Abstand des hinteren Körperteils des Tieres 3 bezüglich einer Referenzlage bestimmt. Das Ergebnis der Auswertung durch die Auswertereinheit wird zu einer Grobpositionierung des Positionierarms 15 verwendet. Zur Feinpositionierung des Positionierarms ist eine Positioniereinrichtung 17 vorgesehen, die mit der Steuereinrichtung 16 verbunden ist.

In der Fig. 3 ist ein Ausführungsbeispiel einer Sensoreinheit 6 dargestellt. Die Sensoreinheit 6 ist bügelförmig ausgebildet. Die Schenkel 20 der Sensoreinheit 6 sind mit der Achse 7 verbunden. Der Abstand zwischen den im wesentlichen parallel verlaufenden Schenkel ist kleiner als die Breite des Melkstandes 4. Die Sensoreinheit 6 ist um die Achse 7 so verschwenkbar, daß die Sensoreinheit 6 den Melkstand 4 zum Betreten durch ein Tier freigegeben wird.

### Bezugszeichenliste

- 1: Melkbecher
- 2: Zitze
- 3: Tier
- 4: Melkstand
- 5: Sensoreinrichtung
- 6: Sensoreinheit
- 7: Achse
- 8: Träger
- 9: Meßeinrichtung
- 10: Hebel
- 11: Betätigungseinheit
- 12: Kolbenstange
- 13: Zylinder
- 14: Ansetzeinrichtung
- 15: Positionierarm
- 16: Steuereinrichtung
- 17: Positioniereinrichtung
- 18: Antrieb
- 19: Auswertereinheit
- 20: Schenkel

## Patentansprüche

1. Verfahren zum Ansetzen wenigstens eines Melkbechers (1) an eine Zitze (2) eines Tieres (3), insbesondere einer Kuh, bei dem
a) wenigstens eine Sensoreinheit (6) einer Sensoreinrichtung (5), zur Anlage an ein hinteres Körperteil des Tieres (3) gebracht wird,
b) eine Bewegung des Tieres zur einer Lageveränderung der Sensoreinheit (6) führt,
c) die Lageveränderung der Sensoreinheit (6) bezüglich einer Referenzlage mittels einer Messeinrichtung (9) gemessen wird,
d) die gemessene Lageveränderung durch eine Auswerteeinheit (19) einer Steuereinrichtung (16) ausgewertet und
e) das Ergebnis dieser Auswertung zur Grobpositionierung wenigstens eines Positionierarmes (15) einer Ansetzeinrichtung (14) zum Anbringen des wenigstens eines Melkbechers (1) an die Zitze (2) des Tieres verwendet wird.

2. Verfahren nach Anspruch 1, bei dem die Sensoreinheit (6) durch verschwenken um wenigstens eine Achse zur Anlage an das hintere Körperteil des Tieres (3) gebracht wird.

3. Verfahren nach Anspruch 1 oder 2, bei dem ein Auslenkwinkel oder ein Auslenkweg der Sensoreinheit (6) gemessen wird.

4. Vorrichtung zum Ansetzen wenigstens eines Melkbechers (1) an eine Zitze (2) eines Tieres (3), insbesondere einer Kuh, mit einer Sensoreinrichtung (5), die wenigstens eine Sensoreinheit (6) hat, die zur Anlage an ein hinteres Körperteil des Tieres (3) bringbar ist, und mit einer Ansetzeinrichtung (14), die wenigstens einen Positionierarm (15) zum Anbringen des wenigstens eines Melkbechers (1) an die Zitze (2) des Tieres (3) und eine Positioniereinrichtung (17) zum Orten wenigstens einer Zitze aufweist, sowie mit einer Steuerungseinrichtung (16), die mit der Positioniereinrichtung (17) verbunden ist, **dadurch gekennzeichnet, daß** die Sensoreinrichtung (5) eine mit der Sensoreinheit (6) verbundene Meßeinrichtung (9) aufweist, daß die Sensoreinrichtung (5) ortsfest bezüglich einer Referenzlage angeordnet ist, daß die Sensoreinheit (6) mit einer Bewegung des Tieres lageveränderlich ist und die Meßeinrichtung (9) eine Lageänderung der Sensoreinheit (6) bezüglich der Referenzlage mißt, und daß die Steuerungseinrichtung (16) eine Auswerteeinheit (19) aufweist, die mit der Meßeinrichtung (9) verbunden ist.

5. Vorrichtung nach Anspruch 4, **dadurch gekennzeichnet, daß** die Sensoreinheit (6) um wenigstens eine Achse (7) verschwenkbar ist.

6. Vorrichtung nach Anspruch 5, **dadurch gekennzeichnet, daß** die Sensoreinheit (6) um eine im wesentlichen horizontal verlaufende Achse (7) verschwenkbar ist.

7. Vorrichtung nach Anspruch 4, 5 oder 6, **dadurch gekennzeichnet, daß** die Sensoreinheit (6) wenigstens ein im wesentlichen stabförmiges Tastelement aufweist.

8. Vorrichtung nach einem der Ansprüche 4 bis 7, **dadurch gekennzeichnet, daß** die Sensoreinheit (6) durch einen U-förmigen Bügel gebildet ist.

9. Vorrichtung nach Anspruch 8, **dadurch gekennzeichnet, daß** der Bügel Schenkel (20) aufweist, die mit der Achse (7) verbunden sind.

10. Vorrichtung nach einem der Ansprüche 5 bis 9, **dadurch gekennzeichnet, daß** die Meßeinrichtung (9) eine Winkelmeßeinrichtung ist, die eine Auslenkung der Sensoreinheit (6) um die Achse (7) mißt.

11. Vorrichtung nach einem der Ansprüche 4 bis 9, **dadurch gekennzeichnet, daß** die Meßeinrichtung (9) eine Wegmeßeinrichtung ist, die einen Auslenkweg der Sensoreinheit (6) aus der Referenzlage mißt.

12. Vorrichtung nach einem der Ansprüche 5 bis 11, **dadurch gekennzeichnet, daß** die Sensoreinrichtung (5) eine Betätigungseinheit (11) aufweist, die mit der Sensoreinheit (6) so verbunden ist, daß diese mit einer vorbestimmten Kraft an einem Körperteil anliegt und die Sensoreinheit (6) einer Bewegung des Tieres (3) folgt.

13. Vorrichtung nach Anspruch 12, **dadurch gekennzeichnet, daß** die Betätigungseinheit (11) mit der Achse (7) verbunden ist.

14. Vorrichtung nach Anspruch 13, **dadurch gekennzeichnet, daß** die Betätigungseinheit (11) über einen Hebel (10) mit der Achse (7) verbunden ist.

15. Vorrichtung nach Anspruch 12, 13 oder 14, **dadurch gekennzeichnet, daß** die Betätigungseinheit (11) eine Kolben-Zylinder-Einheit ist.

16. Vorrichtung nach Anspruch 15, **dadurch gekennzeichnet, daß** die Betätigungseinheit (11) eine pneumatisch arbeitende Kolben-Zylinder-Einheit ist.

17. Vorrichtung nach Anspruch 16, **dadurch gekennzeichnet, daß** die Betätigungseinheit (11) bis zur Anlage der Sensoreinheit (6) an das hintere Körperteil des Tieres (3) mit einem ersten Druck beaufschlagt und danach mit einem zweiten Druck beaufschlagt wird, wobei der zweite Druck kleiner als der erste Druck ist.

18. Vorrichtung nach Anspruch 12, 13 oder 14, **gekennzeichnet durch** eine elektromotorisch wirkende Betätigungseinheit (11).

## Claims

1. Method for applying at least one milk cup (1) at a teat (2) of an animal (3), in particular a cow, wherein
a) at least one sensor unit (6) of a sensor device (5) is applied against a rear part of the body of the animal (3),
b) a movement of the animal results in a change in position of the sensor unit (6),
c) the change in position of the sensor unit (6) is measured with respect to a reference position by means of a measuring device (9),
d) the measured change in position is analysed by means of an analysing unit (19) of a control device (16) and
e) the result of this analysis is used in the approximate positioning of at least one positioning arm (15) of an applying device (14) for the fixing of at least one milk cup (1) at the teat (2) of the animal.

2. Method according to claim 1, wherein the sensor unit (6) is applied against the rear part of the body of the animal (3) by pivoting about at least one axis.

3. Method according to claim 1 or 2, wherein an angle of deflection or a path of deflection of the sensor unit (6) is measured.

4. Device for applying at least one milk cup (1) at a teat (2) of an animal (3), in particular a cow, with a sensor device (5), which has at least one sensor unit (6), which can be applied against a rear part of the body of the animal (3), and with an applying device (14), which has at least one positioning arm (15) for fixing at least one milk cup (1) at the teat (2) of the animal (3) and a positioning device (17) for the positioning of at least one teat, as well as with a control device (16), which is connected to the positioning device (17), **characterised in that** the sensor device (5) has a measuring device (9) connected to the sensor unit (6), that the sensor device (5) is arranged in a fixed position with respect to a reference position, that the sensor unit (6) can change position with a movement of the animal and the measuring device (9) measures a change in position of the sensor unit (6) with respect to the reference position, and that the control device (16) has an analysis unit (19), which is connected to the measuring device (9).

5. Device according to claim 4, **characterised in that** the sensor unit (6) can be pivoted about at least one axis (7).

6. Device according to claim 5, **characterised in that** the sensor unit (6) can be pivoted about a substantially horizontal axis (7).

7. Device according to claim 4, 5 or 6, **characterised in that** the sensor unit (6) has at least one substantially rod-shaped touch element.

8. Device according to one of claims 4 to 7, **characterised in that** the sensor unit (6) is formed by a U-shaped frame.

9. Device according to claim 8, **characterised in that** the frame has shanks (20), which are connected to the axis (7).

10. Device according to one of the claims 5 to 9, **characterised in that** the measuring device (9) is an angle measuring device, which measures a deflection of the sensor unit (6) about the axis (7).

11. Device according to one of the claims 4 to 9, **characterised in that** the measuring device (9) is a path measuring device, which measures a path of deflection of the sensor unit (6) from the reference position.

12. Device according to one of the claims 5 to 11, **characterised in that** the sensor device (5) has an actuation unit (11), which is connected to the sensor unit (6) in such a way that this abuts to a part of the body with a predetermined force and the sensor unit (6) follows a movement of the animal (3).

13. Device according to claim 12, **characterised in that** the actuation unit (11) is connected to the axis (7).

14. Device according to claim 13, **characterised in that** the actuation unit (11) is connected to the axis (7) by a lever (10).

15. Device according to claim 12, 13 or 14, **characterised in that** the actuation unit (11) is a piston-cylinder unit.

16. Device according to claim 15, **characterised in that** the actuation unit (11) is a pneumatically working piston-cylinder unit.

17. Device according to claim 16, **characterised in that** the actuation unit (11) is charged with a first force up until the positioning of the sensor unit (6) at the rear part of the body of the animal (3) and is charged thereafter with a second force, wherein the second force is smaller than the first force.

18. Device according to claim 12, 13 or 14, **characterised by** an electro motor-operating actuation unit (11).

## Revendications

1. Procédé de mise en place d'au moins un gobelet trayeur (1) sur un trayon (2) d'un animal (3), notamment d'une vache, dans lequel
a) au moins une unité de capteur (6) d'un dispositif de capteur (5) est appliquée contre une partie arrière du corps de l'animal (3),
b) un mouvement de l'animal effectue un changement de position de l'unité de capteur (6),
c) le changement de position de l'unité de capteur (6) par rapport à une position de référence est mesuré au moyen d'un dispositif de mesure (9),
d) le changement de position mesuré est analysé par une unité d'analyse (19) d'un dispositif de commande (16) et
e) le résultat de cette analyse est utilisé pour le positionnement approximatif d'au moins un bras de positionnement (15) d'un dispositif de mise en place (14) pour rapporter l'au moins un gobelet trayeur (1) sur le trayon (2) de l'animal.

2. Procédé selon la revendication 1, dans lequel par le pivotement autour au moins d'un axe l'unité de capteur (6) est appliquée contre la partie arrière du corps de l'animal (3).

3. Procédé selon la revendication 1 ou 2, dans lequel un angle de déviation ou un trajet de déviation de l'unité de capteur (6) est mesuré.

4. Dispositif de mise en place d'au moins un gobelet trayeur (1) sur un trayon (2) d'un animal (3), notamment d'une vache, avec un dispositif de capteur (5) qui a au moins une unité de capteur (6) qui peut être appliquée contre une partie arrière du corps de l'animal (3), et avec un dispositif de mise en place (14) qui présente au moins un bras de positionnement (15) pour rapporter l'au moins un gobelet trayeur (1) sur le trayon (2) de l'animal et un dispositif de positionnement (17) pour localiser au moins un trayon, ainsi qu'avec un dispositif de commande (16) qui est relié au dispositif de positionnement (17), **caractérisé en ce que** le dispositif de capteur (5) présente un dispositif de mesure (9) relié à l'unité de capteur (6), **en ce que** le dispositif de capteur (5) est agencé de manière stationnaire par rapport à une position de référence, **en ce que** l'unité de capteur (6) peut changer sa position avec un mouvement de l'animal et le dispositif de mesure (9) mesure un changement de position de l'unité de capteur (6) par rapport à la position de référence et **en ce que** le dispositif de commande (16) a une unité d'analyse (19) qui est reliée au dispositif de mesure (9).

5. Dispositif selon la revendication 4, **caractérisé en ce que** l'unité de capteur (6) est pivotable autour d'au moins un axe (7).

6. Dispositif selon la revendication 5, **caractérisé en ce que** l'unité de capteur (6) est pivotable autour d'un axe (7) s'étendant sensiblement de manière horizontale.

7. Dispositif selon la revendication 4, 5 ou 6 **caractérisé en ce que** l'unité de capteur (6) a au moins un élément de touche sensiblement en forme de barre.

8. Dispositif selon l'une des revendications 4 à 7, **caractérisé en ce que** l'unité de capteur (6) est formée par une bride en forme de U.

9. Dispositif selon la revendication 8, **caractérisé en ce que** la bride a des branches (20) qui sont reliées à l'axe (7).

10. Dispositif selon l'une des revendications 5 à 9, **caractérisé en ce que** le dispositif de mesure (9) est un dispositif de mesure d'angle qui mesure une déviation de l'unité de capteur (6) autour de l'axe (7).

11. Dispositif selon l'une des revendications 4 à 9, **caractérisé en ce que** le dispositif de mesure (9) est un dispositif de mesure de déplacement qui à partir de la position de référence mesure un trajet de déviation de l'unité de capteur (6).

12. Dispositif selon l'une des revendications 5 à 11, **caractérisé en ce que** le dispositif de mesure (5) présente une unité d'actionnement (11) qui est reliée de telle manière à l'unité de capteur (6) que celle-ci s'applique avec une force prédéterminée contre une partie du corps et l'unité de capteur (6) suit un mouvement de l'animal (3).

13. Dispositif selon la revendication 12, **caractérisé en ce que** l'unité d'actionnement (11) est reliée à l'axe (7).

14. Dispositif selon la revendication 13, **caractérisé en ce que** l'unité d'actionnement (11) est reliée à l'axe (7) à l'intermédiaire d'un levier (10).

15. Dispositif selon la revendication 12, 13 ou 14, **caractérisé en ce que** l'unité d'actionnement (11) est une unité à cylindres et pistons.

16. Dispositif selon la revendication 15, **caractérisé en ce que** l'unité d'actionnement (11) est une unité à cylindres et pistons opérant de manière pneumatique.

17. Dispositif selon la revendication 16, **caractérisé en ce que** jusqu'à l'application de l'unité de capteur (6) contre la partie arrière du corps de l'animal (3) l'unité d'actionnement (11) est soumise à une première pression et ensuite à une deuxième pression, la deuxième pression étant plus basse que la première pression.

18. Dispositif selon la revendication 12, 13 ou 14, **caractérisé par** une unité d'actionnement à action de moteur électrique (11).
